# EUROPEAN PATENT APPLICATION

(11) **EP 4 841 691 A1**
(43) Date of publication of application: **18.11.2026**
(21) Application number: 26177358.4
(22) Date of filing: 07.05.2026
(51) Int. Cl.: H01M 4/134, H01M 4/1395, H01M 4/36, H01M 4/587, H01M 4/38, H01M 4/62, H01M 10/0525, C01B 33/00

(54) **NEGATIVE ELECTRODE ACTIVE MATERIAL FOR RECHARGEABLE LITHIUM BATTERY, METHOD OF PREPARING THE NEGATIVE ELECTRODE ACTIVE MATERIAL AND RECHARGEABLE LITHIUM BATTERY INCLUDING THE NEGATIVE ELECTRODE ACTIVE MATERIAL**

(30) Priority: 12.05.2025 KR 20250060946
(71) Applicant: SAMSUNG SDI CO., LTD., Yongin-si, Gyeonggi-do 17084 (KR)
(72) Inventor: LEE, Sung Hoon, 16678 Suwon-si (KR)
(74) Representative: Marks & Clerk LLP

(57) **Abstract**

A negative electrode active material for a rechargeable lithium battery includes a silicon-carbon composite including silicon nanoparticles and amorphous carbon. The negative electrode active material has an oxygen content of 15% by weight or less.

## Description

### BACKGROUND

### 1. Field of the Disclosure

The present disclosure relates to a negative electrode active material for a rechargeable lithium battery, a method of preparing the negative electrode active material, and a rechargeable lithium battery including the negative electrode active material.

### 2. Discussion of Related Art

With the rapid spread of electronic devices, such as mobile phones, notebook computers, and electric vehicles, using batteries, the demand for secondary batteries having high energy density and high capacity has rapidly increased. Thus, research and development for improving the performance of rechargeable lithium batteries has been conducted.

A rechargeable lithium battery includes a positive electrode and a negative electrode that contain an active material capable of the intercalation and deintercalation of lithium ions. A rechargeable lithium battery produces electric energy by oxidation and reduction reactions when the lithium ions are intercalated into and deintercalated from the positive electrode and the negative electrode.

### SUMMARY OF THE DISCLOSURE

The present disclosure is directed to providing a negative electrode active material for a rechargeable lithium battery, the negative electrode active material having a low amount of oxygen.

The present disclosure is also directed to providing a method of preparing a negative electrode active material for a rechargeable lithium battery, the negative electrode active material having a low amount of oxygen.

According to an aspect of the present disclosure, there is provided a negative electrode active material for a rechargeable lithium battery that includes a silicon-carbon composite including silicon nanoparticles and amorphous carbon, with the negative electrode active material having an oxygen content of 15% by weight or less.

According to another aspect of the present disclosure, there is provided a method of preparing a negative electrode active material for a rechargeable lithium battery, which includes preparing silicon nanoparticles and mixing the silicon nanoparticles or an assembly of the silicon nanoparticles with an amorphous carbon precursor and heat-treating the resulting mixture, wherein the preparing of the silicon nanoparticles includes milling silicon precursor particles in the presence of an additive and a milling solvent, the milling solvent having a viscosity of 0.1 to 1 mPa·s at 25 °C, with the additive including a 1-alkyne compound having 3 or more carbon atoms in its main chain.

According to still another aspect of the present disclosure, there is provided a rechargeable lithium battery including a negative electrode including the negative electrode active material and a positive electrode.

At least some of the above and other features of the invention are set out in the claims.

### BRIEF DESCRIPTION OF THE DRAWINGS

The above and other objects, features, and advantages of the present disclosure will become more apparent to those of ordinary skill in the art by describing embodiments thereof in detail with reference to the accompanying drawings.
FIGS. 1 to 4 are cross-sectional views of rechargeable lithium batteries according to embodiments.
FIG. 5 is a scanning electron microscope (SEM) image of the negative electrode active material prepared in Example 1.
FIG. 6 is an SEM image of the negative electrode active material prepared in Comparative Example 1.

### DETAILED DESCRIPTION OF EMBODIMENTS

Hereinafter, embodiments of the present disclosure will be described in detail. However, the embodiments are provided as examples, the present invention is not limited to the disclosed embodiments.

Terms or words used in this specification and claims should not be interpreted as limited to their typical or dictionary meanings, but should be interpreted with meanings and concepts that conform to the technical idea of the present invention based on the principle that the inventor can appropriately define the concept of the term in order to explain his own invention in the best way. Therefore, it should be understood that the embodiments described in this specification and the configurations illustrated in the drawings are only some of the most preferred embodiments of the present disclosure and do not represent all of the technical ideas of the present disclosure, and various equivalents and modifications may exist at the time of filing this application. In addition, when used in this specification, "comprise" and "include" and/or "comprising" specify the presence of mentioned shapes, numbers, steps, operations, elements, components and/or groups thereof, and do not exclude the presence or addition of one or more other shapes, numbers, operations, elements, components and/or groups. Additionally, when describing embodiments of the present disclosure, the phrase "may be" may include "one or more embodiments of the present disclosure."

Furthermore, to aid understanding of the disclosure, the attached drawings may not be drawn to scale, but rather, the dimensions of some components may be exaggerated. Furthermore, the same reference numbers may be assigned to the same components in different embodiments.

Unless otherwise specified herein, when a part such as a layer, film, region, plate, etc. is described as being "on" another part, it includes not only the case where the part is "directly on" the other part but also the case where there is still another part therebetween.

Unless otherwise specified in this specification, anything indicated in the singular may also include the plural. Further, unless otherwise stated, "A or B" may mean "including A, including B, or including A and B."

As used herein, the term "a combination thereof" may mean a mixture, laminate, composite, copolymer, alloy, blend, and reaction product of the components.

Here, the term "particle diameter D50" may refer to the average particle diameter, which means the diameter of particles with a cumulative volume of 50% by volume in the particle size distribution. The particle size distribution may be measured by methods well known to those skilled in the art. For example, the particle size distribution may be measured using a particle size analyzer, a transmission electron micrograph, or a scanning electron micrograph. In another method, a D50 value may be obtained by measuring the particle diameter using a measuring device using dynamic light scattering, performing data analysis to count the number of particles for each particle size range, and then calculating the particle diameter therefrom. Alternatively, D50 may be measured using a laser diffraction method. More specifically, when measuring by laser diffraction, after the particles to be measured are dispersed in a dispersion medium, the particles may be introduced into a commercially available laser diffraction particle diameter measuring device (e.g., Microtrac MT 3000) and irradiated with ultrasonic waves of about 28 kHz at an output of 60 W, and the D50 based on 50% of the particle diameter distribution in the measurement device may be calculated.

The particle diameter may be measured using a particle size analyzer (Beckman Coulter, LS 13 320 XR), but the present disclosure is not limited in this regard.

According to an embodiment, a method of preparing a silicon-carbon composite as a negative electrode active material for a rechargeable lithium battery is provided.

The preparation method includes milling silicon precursor particles to prepare silicon nanoparticles. The preparation method uses an additive described below during milling of the silicon precursor particles. As such, the preparation method not only has excellent processability and is economical, but also may be used to prepare a silicon-carbon composite having a low amount of oxygen.

When the amount of oxygen in the negative electrode active material is high, lithium ions may react with oxygen during charging and discharging of the battery, which thereby reduces battery capacity and also increases the risk of the battery exploding in the event of a fire. Oxygen in the negative electrode active material may be incorporated into the negative electrode active material at several stages during the preparation process of the negative electrode active material. However, the most oxygen is likely incorporated during the process of preparing silicon nanoparticles by milling of silicon precursor particles.

The preparation method uses a milling solvent described below when milling the silicon precursor particles. In the milling solvent, the silicon nanoparticles may be present in an aggregated form. Therefore, the milling solvent may be recycled by recovery through filtration or the like following the method of preparing a negative electrode active material.

The preparation method includes preparing silicon nanoparticles, mixing the silicon nanoparticles or an assembly of the silicon nanoparticles with an amorphous carbon precursor, and heat-treating the resulting mixture. Here, the preparing of the silicon nanoparticles includes milling the silicon precursor particles in the presence of an additive and a milling solvent, the milling solvent having a viscosity of 0.1 to 1 mPa·s at 25 °C, and the additive includes a 1-alkyne compound having 3 or more carbon atoms in its main chain.

Hereinafter, the preparation method will be described in detail.

### Preparation of silicon nanoparticles

Silicon nanoparticles are prepared by milling silicon precursor particles in a solvent. In one embodiment, the milling may be ball milling, for example, ball milling using zirconium milling balls.

The silicon precursor particles may have an average particle diameter (D50) of several micrometers. For example, the silicon precursor particles may have an average particle diameter of 10 µm or less, for example, 5 µm or less or 1 µm or less. In some embodiments, the silicon precursor particles may solely consist of silicon.

In the preparation method, the viscosity at 25 °C of the solvent used in milling the silicon precursor particles is controlled. For example, the solvent has a viscosity of 0.1 to 1 mPa·s at 25 °C. A solvent having a viscosity of more than 1 mPa·s at 25 °C may increase the milling time by lowering the number of collisions between the silicon precursor particles and the milling balls during milling of the silicon precursor particles due to the very high viscosity of the solvent, which thereby increases the concentration of oxygen in the negative electrode active material.

In other examples, the solvent may have a viscosity of for example, 0.1, 0.2, 0.3, 0.4, 0.5, 0.6, 0.7, 0.8, 0.9, 1 mPa·s at 25 °C, 0.1 to 0.5 mPa·s at 25 °C. Here, the viscosity of the solvent may be measured using the method described below.

In one embodiment, the solvent may be a solvent that does not contain oxygen. The oxygen-free solvent may further lower the concentration of oxygen bound to the silicon nanoparticles.

In an embodiment, the solvent may be n-hexane. n-Hexane may increase the fluidity of milling balls, especially zirconium ball particles, during milling to thereby increase the number of collisions between the silicon precursor particles and the milling balls, and thereby significantly shortening the milling time to enhance efficiency. Also, n-hexane may allow the silicon precursor particles to aggregate better by increasing the number of collisions with the milling balls, thereby further enhancing the milling efficiency with the silicon precursor particles. In addition, n-hexane may enable the silicon nanoparticles to be recycled by allowing the silicon nanoparticles to aggregate after the milling is completed.

The milling is performed in the presence of an additive. The additive may act as a dispersant and disperse the silicon precursor particles by modifying the surfaces of the silicon precursor particles, thereby enhancing the milling efficiency of the silicon precursor particles. In related art, a compound having a carboxylic acid group, for example, stearic acid, has been used as the additive. But because stearic acid has a carboxylic acid group, it may react with the silicon precursor particles or the silicon nanoparticles during the milling to oxidize the silicon particles, thereby reducing the capacity of the battery.

In embodiments of the present disclosure, a 1-alkyne compound having 3 or more carbon atoms in its main chain is included as the additive. The 1-alkyne compound has an alkynyl group at the terminal end thereof. The 1-alkyne compound may disperse silicon nanoparticles without oxidizing the silicon nanoparticles by allowing the alkynyl group located at the terminal end of the compound to react with the surfaces of the silicon precursor particles or silicon nanoparticles.

In an embodiment, the compound may be a 1-hexyne compound having 3 to 10 carbon atoms in its main chain. For example, the compound may be 1-hexyne. The 1-hexyne may facilitate the dispersion of the silicon nanoparticles by bonding the alkynyl group of the 1-hexyne to the surfaces of the silicon precursor particles.

In some embodiments, the milling may be performed in the presence of n-hexane and 1-hexyne as the milling solvent and the additive. The milling may be performed after mixing the silicon precursor particles and the milling balls in the solvent and the additive.

In an embodiment, the silicon precursor particles, the solvent, and the additive may be included in a weight ratio (the silicon precursor particles : the solvent : the additive) of 5 to 20 (for example 5, 6, 7, 8, 9, 10, 11, 12, 13, 14, 15, 16, 17, 18, 19, 20) : 30 to 80 (for example, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80) :1. Within this range, the efficiency in preparing the silicon nanoparticles may be high. For example, the weight ratio (the silicon precursor particles : the solvent : the additive) of the silicon precursor particles, the solvent, and the additive may be 5 to 15:40 to 60:1 or 10:45 to 55:1.

The milling may be performed at 20 to 35 °C, for example, 25 to 35 °C. Within these ranges, the efficiency in preparation of the silicon nanoparticles having a desired average particle diameter may be high.

The milling may be performed for 10 to 25 hours, for example, 10 to 20 hours, or 10 to 16 hours. In these ranges of time, efficiency in preparation of the silicon nanoparticles having a desired average particle diameter may be high.

The silicon nanoparticles may have an average particle diameter (D50) of 10 to 200 nm, for example, 10, 15, 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, 200 nm, 50 to 150 nm, for example, 50 to 100 nm. In these ranges, a negative electrode active material having excellent capacity may be provided.

In some embodiments, the silicon nanoparticles may be primary particles.

The silicon nanoparticles themselves may be used in the preparation of the silicon precursor below, or a dispersion (a silicon nanoparticle dispersion) containing the silicon nanoparticles may be used. The silicon nanoparticle dispersion may include a solvent that is easily volatilized without oxidizing the silicon nanoparticles. For example, the solvent may be n-hexane. The concentration of the silicon nanoparticles in the silicon nanoparticle dispersion may be 10 to 30% by weight.

### Heat treatment

The silicon-carbon composite is prepared by mixing the silicon nanoparticles or an assembly of the silicon nanoparticles with an amorphous carbon precursor and heat-treating the resulting mixture. For example, the silicon-carbon composite may be prepared by mixing an assembly of the silicon nanoparticles with the amorphous carbon precursor and heat-treating the resulting mixture.

The assembly of the silicon nanoparticles may be prepared by spray-drying the silicon nanoparticle dispersion. The spray drying may be used to assemble the silicon nanoparticles into micrometer-sized secondary particles. The secondary particles may include pores (e.g., gaps) between the silicon nanoparticles.

The sphericity of the negative electrode active material may be controlled in the spray drying by controlling the type of nozzle and the atmosphere used. For example, a two-fluid nozzle may be used that is capable of mixing two fluids (liquid and gas) to form fine particles. When the two-fluid nozzle is used, fine spherical particles may be formed. Because the formed particles are small, an additional pulverization process is not required, and, thus, the spherical shape may be maintained. Large particles may be formed when a disk-type nozzle is used that sprays while rotating. In such a case, because the particles have a large size, an additional pulverization process is required. Thus, the particles having various shapes such as spherical, elliptical, and donut shapes are formed, which may not be desirable.

The spray drying may be suitably performed under a N₂ atmosphere, for example, while blowing N₂ at a flow rate of 30 L/min to 50 L/min or a flow rate of 30 L/min to 40 L/min. When the flow rate of N₂ is within these ranges, the spray drying may form spherical microparticles having an appropriate size. When the flow rate of N₂ is less than 30 L/min, the sprayed products may agglomerate, thereby increasing the size of the prepared particles, which may not be suitable. On the other hand, when the flow rate of N₂ is greater than 50 L/min, there may be a problem that a large amount of fine powder may be generated due to the very small size of the prepared particles.

The spray drying may be performed at 50 °C to 170 °C. When the spray drying is performed in this temperature range, the temperature is higher than the boiling point of the solvent such that micro-sized spherical Si particles may be sufficiently dried through instantaneous volatilization, which is desirable. In some examples, the spray drying may be performed at 50 °C to 150°C.

The amorphous carbon precursor may be a polyimide-based resin, a furan resin, a phenol resin, a polyvinyl alcohol resin, a poly(meth)acrylic acid resin, a polyurethane resin, a cellulose resin, an epoxy resin, a polystyrene resin, petroleum-based pitch, coal-based pitch, green coke, mesophase pitch, coal-based oil, petroleum-based heavy oil, coke, or a combination thereof. In a specific example, the amorphous carbon precursor may be mesophase pitch.

The silicon nanoparticles or the assembly of the silicon nanoparticles and the amorphous carbon precursor may be included in a weight ratio of 20:80 to 99:1 (silicon nanoparticles or the assembly of the silicon nanoparticles: amorphous carbon precursor) based on a total of 100 parts by weight of the silicon nanoparticles or the assembly of the silicon nanoparticles and the amorphous carbon precursor. In this weight ratio range, it is possible to prepare a negative electrode active material having excellent battery capacity. For example, the weight ratio (silicon nanoparticles or the assembly of the silicon nanoparticles : amorphous carbon precursor) may be 50:50 to 99:1, or 50:50 to 96:4, or 55:45.

The heat treatment may be performed at 400 °C to 1,200 °C, or 700 °C to 1,000 °C. When the heat treatment is performed in these temperature ranges, the shape of the negative electrode active material may remain spherical. As the amorphous carbon is carbonized, the conductivity of the negative electrode active material may be improved, and the initial efficiency of the battery may be improved.

The heat treatment may be performed under a N₂ atmosphere. With this heat treatment process, because the amorphous carbon precursor is converted into amorphous carbon, the amorphous carbon precursor may be included in the negative electrode active material.

The mixing with the amorphous carbon precursor and the heat treatment may be performed one or more times. For example, the mixing with the amorphous carbon precursor and the heat treatment may be performed two or more times.

Hereinafter, a method of performing the mixing of the amorphous carbon precursor and the heat treatment is described in detail.

### Primary mixing and heat treatment

The silicon nanoparticles or the assemblies of the silicon nanoparticles are mixed with the amorphous carbon precursor. The resulting mixture is then heat-treated.

The amorphous carbon precursor may be the same as described above. For example, the amorphous carbon precursor may be mesophase pitch.

The silicon nanoparticles or the assemblies of the silicon nanoparticles and the amorphous carbon precursor may be included in a weight ratio of 20:80 to 99:1 (silicon nanoparticles or assemblies of silicon nanoparticles : amorphous carbon precursor) based on a total of 100 parts by weight of the silicon nanoparticles or the assemblies of the silicon nanoparticles and the amorphous carbon precursor. In this weight ratio range, it is possible to prepare a negative electrode active material having excellent battery capacity. In some examples, the weight ratio (silicon nanoparticles or assemblies of silicon nanoparticles : amorphous carbon precursor) may be 50:50 to 99:1, or 50:50 to 70:30, or 55:45.

The heat treatment may be performed at 400 °C to 1,200 °C, or 700 °C to 1,000 °C, or 800 °C to 1,000 °C. When the heat treatment is performed in these temperature ranges, the shapes of the particles of the negative electrode active material may remain spherical. And, as the amorphous carbon is carbonized, the conductivity of the negative electrode active material may be improved and the initial efficiency of the battery may be improved.

The heat treatment may be performed, for example, under a N₂ atmosphere.

### Secondary mixing and heat treatment

The product prepared in the primary mixing and heat treatment is mixed with the amorphous carbon precursor. The resulting mixture is then heat-treated.

The amorphous carbon precursor may be substantially the same as described above. For example, the amorphous carbon precursor may be mesophase pitch.

The product prepared in the primary mixing and heat treatment may be used as is. But, in other embodiments, the product may be pulverized, mixed with the amorphous carbon precursor, and then heat-treated.

The pulverized material prepared in the primary mixing and heat treatment and the amorphous carbon precursor may be included in a weight ratio (pulverized material : amorphous carbon) of 20:80 to 99.9:0.1 based on a total of 100 parts by weight of the pulverized material and the amorphous carbon precursor. In this weight ratio range, it is possible to prepare a negative electrode active material that provides for excellent battery capacity. For example, the weight ratio (pulverized material : amorphous carbon) may be 50:50 to 99:1, or 60:40 to 96:4, or 90:10 to 95:5, or 95:5.

The heat treatment may be performed at 400 °C to 1,200 °C, or 700 °C to 1,000 °C, or 800 °C to 1,000 °C. When the heat treatment is performed in these temperature ranges, the shapes of the particles of the negative electrode active material may remain spherical. As such, as the amorphous carbon is carbonized, the conductivity of the negative electrode active material may be improved and the initial efficiency of the battery may be improved.

The heat treatment may be performed, for example, under a N₂ atmosphere.

Before the heat treatment, the pulverized material and the amorphous carbon precursor may be mixed in a solvent and then dried. More specifically, the pulverized material and the amorphous carbon may be mixed in a mixed solvent, stirred, and then dried. The mixed solvent may be an aqueous solvent that may include, for example, water and alcohol in a weight ratio (water : alcohol) of 0.5 to 5:1, for example, 1 to 5:1, or 3:1. In these ranges, the preparation yield of the silicon nanoparticles may increase. The alcohol may be a monoalcohol having 1 to 5 carbon atoms in its main chain, for example, ethanol. The drying may be performed at 50 to 300 °C, for example, 50 to 150 °C, or 100 °C. The drying may be performed for 1 to 5 hours, for example, 1 to 3 hours.

Negative electrode active material for rechargeable lithium battery

Hereinafter, a negative electrode active material for a rechargeable lithium battery will be described.

The negative electrode active material for a rechargeable lithium battery includes a silicon-carbon composite including silicon nanoparticles and amorphous carbon, and the negative electrode active material has an oxygen content of 15% by weight or less. Thus, the degree of lithium ion reaction with oxygen in the negative electrode active material during charging and discharging of a battery may be low, thereby enhancing the battery capacity and reducing the risk of the battery exploding in the event of a fire. For example, the negative electrode active material may have an oxygen content of 0 to 15% by weight or 10 to 15% by weight for example, 0, 0.5, 1, 1.5, 2, 2.5, 3, 3.5, 4, 4.5, 5, 5.5, 6, 6.5, 7, 7.5, 8, 8.5, 9, 9.5, 10, 10.5, 11, 11.5, 12, 12.5, 13, 13.5, 14, 14.5, 15% by weight.

The negative electrode active material may include the above-described additive. That is, the additive included in the negative electrode active material may include a 1-alkyne compound having 3 or more carbon atoms in its main chain, for example, 1-hexyne .

The negative electrode active material may be prepared using the above-described method of preparing a negative electrode active material.

In an embodiment, the negative electrode active material may include a core including silicon nanoparticles and amorphous carbon, with an amorphous carbon coating layer surrounding the core.

In an embodiment, the negative electrode active material may be a binary negative electrode active material made of silicon and amorphous carbon.

In the negative electrode active material, the distance between adjacent silicon nanoparticles included in the core may be 100 nm or less, 90 nm or less, 80 nm or less, 70 nm or less, 65 nm or less, 60 nm or less, 55 nm or less, 50 nm or less, 45 nm or less, 40 nm or less, or 35 nm or less. When the distance between adjacent silicon nanoparticles is in these ranges, the size of the pores included in the core and the total volume of the pores may be reduced. Further, the volume of the pores present in the negative electrode active material may be reduced, and the distance between adjacent silicon nanoparticles may be narrowed to prevent an electrolyte from penetrating into the core during battery operation. As a result, side reactions between the electrolyte and the negative electrode active material may be suppressed, which thereby improves the battery lifespan.

Herein, the distance between adjacent silicon nanoparticles refers to the distance between the centers of adjacent silicon nanoparticles. The distance between adjacent silicon nanoparticles may mean that the distance between adjacent silicon nanoparticles in the range of 50% to 100%, for example, 60% to 100%, 70% to 100%, or 80% to 100% of the total number of the silicon nanoparticles included in the core falls within the above range.

The silicon nanoparticles may have an average particle diameter (D50) of 50 nm to 150 nm, for example, 50 nm or more, 60 nm or more, 70 nm or more, or 80 nm or more, and 150 nm or less, 140 nm or less, 130 nm or less, or 115 nm or less. When the average particle diameter (D50) of the silicon nanoparticles is within these ranges, side reactions with the electrolyte may be suppressed and expansion of the silicon nanoparticles may be lowered, which thereby improve the initial efficiency and lifespan characteristics of a battery including the silicon nanoparticles.

The silicon nanoparticles may have a full width at half maximum of an X-ray diffraction angle (2 theta) of 0.3° to 7° using CuKα rays on the (111) plane. Accordingly, lifespan characteristics may be improved. The full width at half maximum of the X-ray diffraction angle (2 theta) using CuKα rays on the (111) plane of the silicon nanoparticles may be controlled by adjusting the size of the silicon particles or changing the process of preparing silicon nanoparticles.

The aspect ratio of the silicon nanoparticles may be 2 to 8, for example 2 to 6. The minor axis length (a) of the silicon nanoparticles may be 20 nm to 50 nm and the major axis length (b) of the silicon nanoparticles may be 50 nm to 300 nm. When the aspect ratio, the major axis length (b), and the minor axis length (a) of the silicon nanoparticles fall within these ranges, side reactions between the negative electrode active material and the electrolyte may be suppressed and expansion of the silicon nanoparticles may be lowered, which thereby improve the initial efficiency and lifespan characteristics. The aspect ratio may refer to the average aspect ratio and may be determined from SEM images. For example, SEM images of the silicon nanoparticles are first obtained. These images may then then be analyzed using an image analysis program (e.g., ImageJ). From each SEM image, approximately 100 silicon nanoparticles may be randomly selected, and for each silicon nanoparticle, the longest distance (major axis) and the shortest distance (minor axis) may be measured. The aspect ratio for each silicon nanoparticle may be calculated by dividing the major axis by the minor axis. The arithmetic mean of these individual aspect ratios may then be computed to obtain the average aspect ratio.

Based on the total weight of the negative electrode active material, the silicon nanoparticles may be included in an amount of 20% by weight to 80% by weight, 30% by weight to 70% by weight, 30% by weight to 60% by weight, or 30% by weight to 50% by weight. When the amount of the silicon nanoparticles is within these ranges, battery capacity may be improved.

The amorphous carbon included in the core may be soft carbon, hard carbon, mesophase pitch carbide, calcined coke, or a combination thereof. For example, the term "soft carbon" may refer to graphitizable carbon materials and may be readily graphitized by heat treatment at a high temperature, e.g., 2800 °C, and "hard carbon" may refer to non-graphitizable carbon materials and may be slightly graphitized by heat treatment.

When the amorphous carbon is included in the core, the volume of pores in the negative electrode active material may be reduced, thereby suppressing side reactions with the electrolyte. Also, when the silicon nanoparticles in the negative electrode active material expand, the expansion of the silicon nanoparticles may be buffered, thereby suppressing battery expansion. Further, because the amorphous carbon acts as a binder, the amorphous carbon may mitigate breakage of the negative electrode active material, which thereby maintains the shape of a negative electrode active material.

The coating layer includes amorphous carbon, and the coating layer may have a thickness of 1 nm to 900 nm, for example, 5 nm to 800 nm. Such a thickness may reduce the specific surface area of the negative electrode active material and prevent the electrolyte from being introduced into the negative electrode active material. As a result, side reactions with the electrolyte may be minimized and the lifespan characteristics of the battery may be improved.

The amorphous carbon included in the coating layer may be soft carbon, hard carbon, mesophase pitch carbide, calcined coke, or a combination thereof. The amorphous carbon may be identical to or different from the amorphous carbon included in the core.

Based on the total weight of the negative electrode active material, the amorphous carbon may be included in an amount of 20% by weight to 80% by weight, for example, 20% by weight to 70% by weight, 20% by weight to 60% by weight, 20% by weight to 50% by weight, or 20% by weight to 40% by weight. When the amount of the amorphous carbon is within these ranges, side reactions between the negative electrode active material and the electrolyte may be suppressed.

The negative electrode active material according to embodiments may have an average particle diameter (D50) of 2 µm to 15 µm, for example, 3 µm to 13 µm, or 5 µm to 10 µm. When the average particle diameter of the negative electrode active material is within these ranges, lithium ions may easily diffuse into the interior of the negative electrode active material, and battery resistance and rate characteristics may be improved. Also, excessive increase in the specific surface area of the negative electrode active material may be suppressed, thereby reducing side reactions with the electrolyte.

The above stated average particle diameter (D50) of the negative electrode active material may be achieved by appropriately controlling the milling and pulverization conditions during the preparation of the negative electrode active material.

The negative electrode active material may have pores having a size of 200 nm or less. The pores may have a total pore volume of 3.0 x 10⁻² cm³/g or less, for example 2.5 x 10⁻² cm³/g or less, 2.3 x 10⁻² cm³/g or less, 2.0 x 10⁻² cm³/g or less, 1.9 x 10⁻² cm³/g or less, 1.8 x 10⁻² cm³/g or less, 1.7 x 10⁻² cm³/g or less, 1.6 x 10⁻² cm³/g or less, 1.5 x 10⁻² cm³/g or less, 1.4 x 10⁻² cm³/g or less, 1.3 x 10⁻² cm³/g or less, 1.2 x 10⁻² cm³/g or less, 1.1 x 10⁻² cm³/g or less, 1.0 x 10⁻² cm³/g or less, 0.9 x 10⁻² cm³/g or less, 0.8 x 10⁻² cm³/g or less, 0.7 x 10⁻² cm³/g or less, 0.6 x 10⁻² cm³/g or less, or 0.5 x 10⁻² cm³/g or less. Within these ranges, side reactions between the electrolyte and the silicon nanoparticles may be suppressed, thereby improving the initial efficiency and lifespan characteristics. The total pore volume of the pores having a size of 200 nm or less may be quantitatively measured using a Barrett-Joyner-Halenda (BJH) analysis device.

The pore size of the negative electrode active material may be 200 nm or less, for example, 170 nm or less, 150 nm or less, 130 nm or less, 100 nm or less, or 50 nm or less. When the pore size of the negative electrode active material is controlled within these ranges, side reactions between the electrolyte and the silicon nanoparticles may be lowered, and batteries having improved initial efficiency and lifespan characteristics may be obtained.

The negative electrode active material may have a BET specific surface area of 10 m²/g or less. When the BET specific surface area is within this range, side reactions with the electrolyte may be suppressed, thereby improving the efficiency characteristics of the battery.

In the negative electrode active material, the amount of the silicon nanoparticles and the amorphous carbon based on a total of 100 parts by weight of the silicon nanoparticles and the amorphous carbon may be in a weight ratio of 80:20 to 20:80, for example, 70:30 to 30:70, 70:30 to 40:60, or 70:30 to 50:50. When the amount of the silicon nanoparticles and the amorphous carbon is within these ranges, the internal pore volume may be reduced and the amorphous carbon may be uniformly dispersed inside and on the surface of the negative electrode active material. As a result, side reactions with the electrolyte may be suppressed, and the performance of the negative electrode active material may be improved.

In an embodiment, the negative electrode active material may have a sphericity of 0.7 or more, and a sphericity of 0.7 or more and 1.0 or less. Here, the sphericity refers to the ratio (Lb/La) of minor axis length (Lb) to the major axis length (La) when the negative electrode active material has a circular or oval shape.

In embodiments, the negative electrode active material may have an elliptical or spherical cross-section. Because a sphericity of 1.0 means that the negative electrode active material essentially has a perfect spherical shape, it is of course widely understood by those skilled in the art that the maximum value of the sphericity is 1.0, which cannot be exceeded.

When the sphericity of the negative electrode active material is 0.7 or more, the surface area of the negative electrode active material may be reduced. Thus, the area in which the negative electrode active material comes into contact with the electrolyte or the area in which the negative electrode active material reacts with lithium may be reduced. Side reactions with the electrolyte may therefore be reduced, the reaction with lithium may be reduced, and the volume expansion resulting from the uniform expansion of the active material in the negative electrode may be reduced.

These effects due to the decrease in surface area may be even more effective when the BET specific surface area of the negative electrode active material is 10 m²/g or less, for example, from 0.5 m²/g to 10 m²/g. When the BET specific surface area value of the negative electrode active material is 10 m²/g or less, for example, from 0.5 m²/g to 10 m²/g, performance may be improved by reducing contact with the electrolyte to suppress side reactions and initial efficiency may be enhanced.

That is, because the negative electrode active material according to an embodiment has a sphericity of 0.7 or more and a BET specific surface area of 10 m²/g or less as well, the negative electrode active material may be an active material in which side reactions with the electrolyte are reduced and reactions with lithium are also reduced.

In some embodiments, the silicon nanoparticles of the negative electrode active material are primary particles. In such a case, the primary particles may be included in the silicon-carbon composite in the form of secondary particles that are assemblies of primary particles. Accordingly, the silicon-carbon composite may include secondary particles in which Si nanoparticles are assembled.

In an embodiment, the silicon nanoparticles may be flaky, spherical, or the like, but the present disclosure is not particularly limited thereto. Also, the secondary particles in the form of assembled primary particles may be spherical.

In an embodiment, the amorphous carbon may cover the surfaces of the secondary particles. That is, the negative electrode active material may include a core including silicon nanoparticles, a secondary particle core in which primary particles, which are silicon nanoparticles, are assembled, and amorphous carbon surrounding the core. In an embodiment, the core refers to a region located inside the active material. More specifically, because the core is surrounded by amorphous carbon, the core refers to a region that is not substantially exposed to the outside of the material. Therefore, the core may be viewed as a region located inside the amorphous carbon surrounding the core.

Also, amorphous carbon may be filled between the primary particles. When the amorphous carbon is filled between the primary particles, the amorphous carbon covers the surfaces of the primary particles. In this way, when the amorphous carbon is filled between the primary particles, the volume of the pores in the negative electrode active material may be reduced to suppress side reactions with the electrolyte. Also, when the primary particles, which are silicon nanoparticles, expand, the amorphous carbon serves to buffer the expansion. Still further, because the amorphous carbon filled between the primary particles acts as a binder, breakage of the negative electrode active material particles may be prevented and conductivity may be improved.

The amorphous carbon may be soft carbon, hard carbon, mesophase pitch carbide, calcined coke, or a combination thereof.

The silicon nanoparticles may be flaky. That is, the silicon nanoparticles may have a flake-type shape having a major axis and a minor axis. In this case, the ratio of the major axis/minor axis, for example, the width/thickness, of the silicon particles may be 5 to 20. When the ratio of the major axis/minor axis of the silicon particles is within this range, the expansion of the Si nanoparticles may be lowered, thereby improving the initial efficiency and lifespan characteristics of a battery including the active material.

The silicon nanoparticles may have a particle diameter of 10 nm to 200 nm. The particle diameter may be an average particle diameter of particle diameters. In this case, the average particle diameter may refer to a particle diameter (D50) measured by cumulative volume. Unless otherwise defined in the present specification, such a particle diameter (D50) refers to an average particle diameter (D50) that represents the diameter of particles having a cumulative volume of 50% by volume in a particle size distribution. When the size of the Si nanoparticles is within this range side reactions between the negative electrode active material and the electrolyte may be suppressed and expansion of the Si nanoparticles may be lowered, which thereby improves the initial efficiency and lifespan characteristics of the battery.

Also, when the silicon nanoparticles are secondary particles that are assemblies of primary particles, the secondary particles may have a particle diameter of 2 µm to 15 µm, for example, a particle diameter of 5 µm to 10 µm. The primary particles may have a particle diameter of 10 nm to 200 nm. When the average particle diameters of the negative electrode active material are in these ranges, lithium ions may easily diffuse into the negative electrode active material, and electrical resistance and rate characteristics may be improved.

In an embodiment, the full width at half maximum (FWHM) of the diffraction peak of the (111) plane of the silicon particles by X-ray diffraction using CuKα rays may be 0.3 degrees to 7 degrees. When the full width at half maximum (FWHM) (111) of the Si particles is within this range, the lifespan characteristics of the battery may be improved. The X-ray diffraction measurement may be performed using CuKα rays as target rays. Here, the measurement may be performed under the measurement conditions of 2θ = 40° to 50°, a scan speed (°/S) of 0.04 to 0.06, and a step size (°/step) of 0.01 to 0.03.

The mixing ratio of the silicon nanoparticles and the amorphous carbon may be a weight ratio of 8:2 to 2:8, or may be a weight ratio of 7:3 to 5:5. In an embodiment, because the silicon nanoparticles may be present in the negative electrode active material in the form of secondary particles, the mixing ratio of the silicon nanoparticles and the amorphous carbon may consequently also be viewed as a mixing ratio of the secondary particles and the amorphous carbon. When the mixing ratio of the silicon nanoparticles and the amorphous carbon is within the above ranges, a better capacity may be achieved, particularly a higher capacity as compared to a crystalline carbon negative electrode active material.

The amorphous carbon may be present as coating layers that coats the surfaces of the secondary particles and may also be included in a form filled between the primary particles, as well as in the form of such coating layers. Regardless of whether the amorphous carbon is filled between the primary particles, is present as a coating layer, or present in any other form, the total amount of the amorphous carbon included in the negative electrode active material may be 20 to 80% by weight based on 100% by weight of the entire negative electrode active material.

In an embodiment, when the amorphous carbon is present as a coating layers coating and surrounding the surfaces of the secondary particles, the amorphous carbon may be present on the surfaces of the secondary particles with a thickness of 1 nm to 1,000 nm, for example, a thickness of 30 nm to 200 nm. When the thickness of the amorphous carbon layer is included in these ranges, the conductivity of the negative electrode active material may be improved, and contact with the electrolyte may be reduced, which thereby effectively prevents an increase in resistance due to the generation of side products.

In an embodiment, the negative electrode active material may have a particle diameter of 40 µm or less, for example, a particle diameter of 2 µm to 15 µm. When the particle diameter of the negative electrode active material is these ranges, lithium ions may easily diffuse into the negative electrode active material, and battery resistance and rate characteristics may be improved.

### Rechargeable lithium battery

According to embodiments of the present disclosure, the rechargeable lithium battery includes a negative electrode including the negative electrode material for the rechargeable lithium battery and a positive electrode.

The negative electrode for a rechargeable lithium battery may include a current collector and a negative electrode active material layer on the current collector. The negative electrode active material layer may include the negative electrode active material. In a specific example, the negative electrode active material may be included in an amount of 95 wt% or more, for example, 95 to 100 wt%, of the total negative electrode active material in the negative electrode active material layer. In addition to the negative electrode active material (first negative electrode active material), the negative electrode active material layer may further include a different negative electrode active material (second negative electrode active material).

The second negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped, natural graphite or artificial graphite. The amorphous carbon may be a soft carbon, a hard carbon, a mesophase pitch carbonization product, calcined coke, and the like.

The lithium metal alloy may include an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x < 2), or a Si-Q alloy, where Q is selected from an alkali metal, an alkaline-earth metal, a Group 13 element, a Group 14 element (excluding Si), a Group 15 element, a Group 16 element, a transition metal, a rare earth element, and a combination thereof. The Sn-based negative electrode active material may include Sn, SnO₂, a Sn-based alloy, or a combination thereof.

The silicon-carbon composite may be a composite of silicon and amorphous carbon. In an embodiment, the silicon-carbon composite may be in a form of silicon particles with amorphous carbon coated on the surfaces of the silicon particles. For example, the silicon-carbon composite may include a secondary particle (core) in which primary silicon particles are assembled, and an amorphous carbon coating layer (shell) on the surfaces of the secondary particles. The amorphous carbon may also be between the primary silicon particles, for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles, with an amorphous carbon coating layer on a surface of the core.

The Si-based negative electrode active material or the Sn-based negative electrode active material may be used in combination with a carbon-based negative electrode active material.

In some examples, the negative electrode active material layer may include about 90 wt% to about 99 wt% of the negative electrode active material, about 0.5 wt% to about 5 wt% of a binder, and about 0 wt% to about 5 wt% of a conductive material.

The binder may serve to attach the negative electrode active material particles to each other and also to attach the negative electrode active material to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity (e.g., electrical conductivity) to the electrode. Any material that does not cause an undesirable chemical change in the rechargeable lithium battery and conducts electrons can be used in the battery. Non-limiting examples of the conductive material include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, etc. in a form of a metal powder or a metal fiber; a conductive polymer such as a polyphenylene derivative; or a mixture thereof.

The negative current collector may include a copper foil, a nickel foil, a stainless steel foil, a titanium foil, a nickel foam, a copper foam, a polymer substrate coated with a conductive metal, or a combination thereof.

### Positive electrode

A positive electrode for a rechargeable lithium battery may include a current collector and a positive electrode active material layer on the current collector. The positive electrode active material layer may include a positive electrode active material and may further include a binder and/or a conductive material. For example, the positive electrode may further include an additive that can serve as a sacrificial positive electrode.

### Positive electrode active material

The positive electrode active material may include a compound (lithiated intercalation compound) that is capable of intercalating and deintercalating lithium. Specifically, at least one of a composite oxide of lithium and a metal selected from **cobalt,** manganese, nickel, and combinations thereof may be used.

The composite oxide may be a lithium transition metal composite oxide. Specific examples of the composite oxide include lithium nickel-based oxide, lithium cobalt-based oxide, lithium manganese-based oxide, lithium iron phosphate-based compound, cobalt-free nickel-manganese-based oxide, or a combination thereof.

**In** some examples, compounds represented by any one of the following Chemical Formulas may be used: LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹dGₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8). **In** these Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may be, for example, a high nickel-based positive electrode active material. Based on 100 mol% of the metal excluding lithium in the lithium transition metal composite oxide, the high nickel-based positive electrode active material may have a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol%. The high-nickel-based positive electrode active material may be capable of providing high capacity and can be applied to a high-capacity, high-density rechargeable lithium battery.

An amount of the positive electrode active material may be about 90 wt% to about 99.5 wt% based on 100 wt% of the positive electrode active material layer. Amounts of the binder and the conductive material may each be about 0.5 wt% to about 5 wt% based on 100 wt% of the positive electrode active material layer.

The binder serves to attach the positive electrode active material particles to each other and also to attach the positive electrode active material to the current collector. Examples of the binder include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like.

The conductive material may be used to impart conductivity (e.g., electrical conductivity) to the electrode. Any material that does not cause an undesirable chemical change in the rechargeable lithium battery and conducts electrons can be used in the battery. Examples of the conductive material include a carbon-based material such as natural graphite, artificial graphite, carbon black, acetylene black, ketjen black, a carbon fiber, a carbon nanofiber, and carbon nanotube; a metal-based material containing copper, nickel, aluminium, silver, etc., in a form of a metal powder or a metal fiber; a conductive polymer such as a polyphenylene derivative; or a mixture thereof.

Aluminium may be used as the current collector, but the present disclosure is not limited thereto.

The rechargeable lithium battery may further include an electrolyte solution.

### Electrolyte Solution

The electrolyte solution for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN, wherein R is a C2 to C20 linear, branched, or cyclic hydrocarbon group, a double bond, an aromatic ring, or an ether bond, and the like; amides such as dimethylformamide; dioxolanes such as 1,3-dioxolane, 1,4-dioxolane, and the like; sulfolanes, and the like.

The non-aqueous organic solvents may be used alone or in combination of two or more.

In addition, when using a carbonate-based solvent, a cyclic carbonate and a chain carbonate may be mixed and used. The cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

The rechargeable lithium battery may be cylindrical, prismatic, pouch, or coin-type depending on its shape.

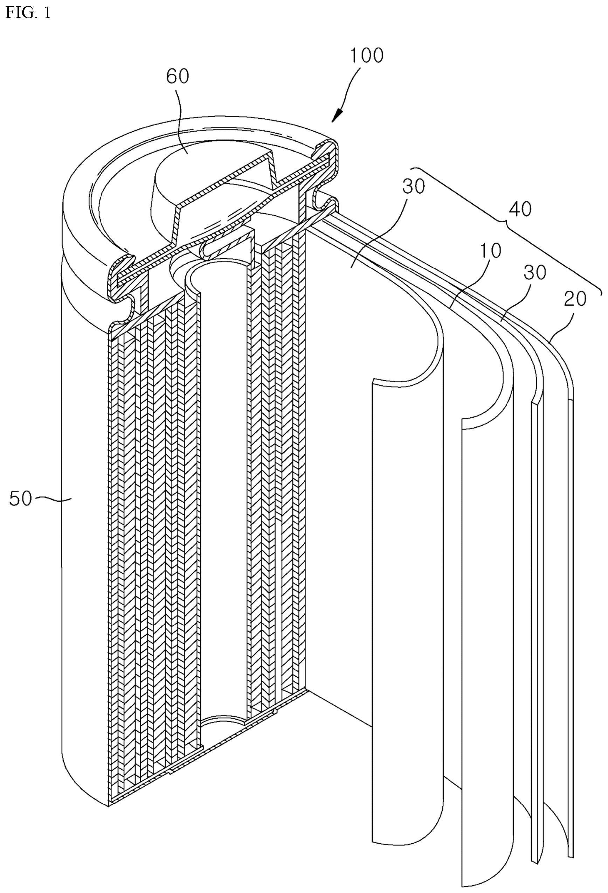

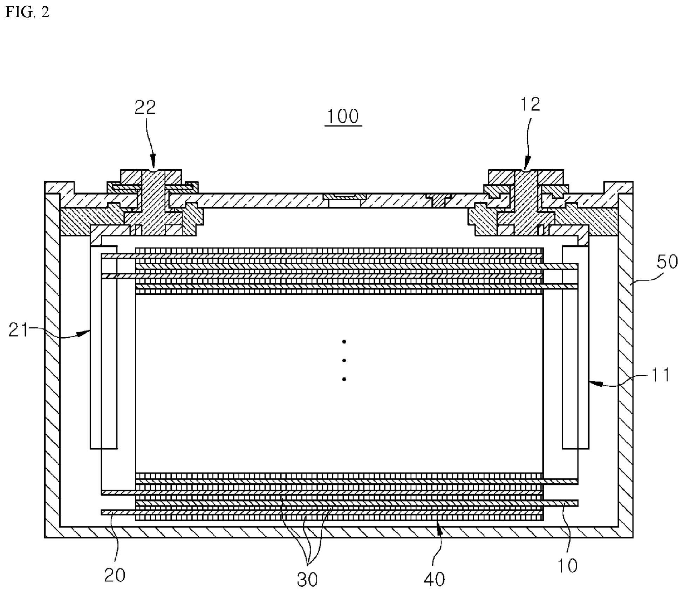

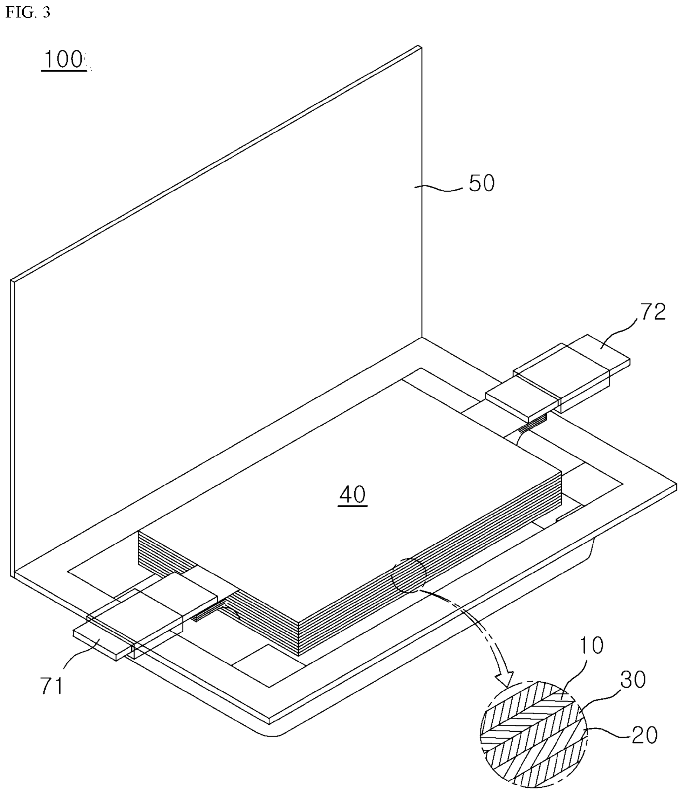

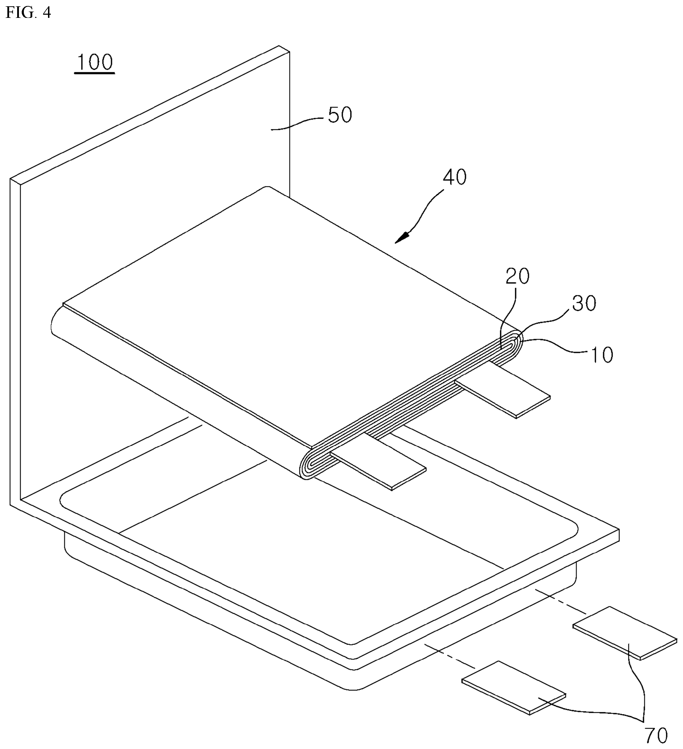

FIGS. 1 to 4 are schematic views of rechargeable lithium batteries according to embodiments of the present disclosure. FIG. 1 shows a cylindrical battery, FIG. 2 shows a prismatic battery, and FIGS. 3 and 4 show pouch-type batteries. Referring to FIGS. 1 to 4, the rechargeable lithium battery 100 may include an electrode assembly 40 including a separator 30 between a positive electrode 10 and a negative electrode 20 and a case 50 in which the electrode assembly 40 is included. The positive electrode 10, the negative electrode 20, and the separator 30 may be impregnated with an electrolyte solution (not shown). As shown in FIG. 1, the rechargeable lithium battery 100 may include a sealing member 60 sealing the case 50. As shown in FIG. 2, the rechargeable lithium battery 100 may include a positive lead tab 11, a positive terminal 12, a negative lead tab 21, and a negative terminal 22. The rechargeable lithium battery 100 may include an electrode tab 70, which may be, for example, a positive electrode tab 71 and a negative electrode tab 72 forming an electrical path for inducing the current formed in the electrode assembly 40 to outside of the battery.

The rechargeable lithium battery according to an embodiment may be used in automobiles, mobile phones, and/or various types of electric devices, as non-limiting examples.

The rechargeable lithium battery may further include a separator.

Depending on the type of rechargeable lithium battery, the separator may be present between the positive and negative electrodes. Such a separator may include polyethylene, polypropylene, polyvinylidene fluoride, or multilayer films comprising two or more layers thereof. Furthermore, mixed multilayer films, such as a polyethylene/polypropylene two-layer separator, a polyethylene/polypropylene/polyethylene three-layer separator, or a polypropylene/polyethylene/polypropylene three-layer separator, may also be used.

The separator may include a porous substrate and a coating layer comprising an organic material, an inorganic material, or a combination thereof, positioned on one or both surfaces of the porous substrate. The porous substrate may be a polymer film formed of a polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, cyclic olefin copolymer, polyphenylene sulfide, polyethylene naphthalate, glass fiber, and polytetrafluoroethylene (e.g., TEFLON^{®}), or a copolymer or mixture of two or more thereof. The organic material may include a polyvinylidene fluoride-based polymer or a (meth)acrylic polymer. The inorganic material may include, but is not limited to, inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof. The organic and inorganic materials may be mixed in one coating layer or may be present in a laminated form with a coating layer including an organic material and a coating layer including an inorganic material.

Hereinafter, examples and comparative examples of the present disclosure will be described. However, it should be understood that the following examples are only examples of the present is not limited to the examples and comparative examples.

### Example 1

n-Hexane was provided with a viscosity at 25 °C of 0.5 mPa·s. The viscosity was determined using a rotational viscometer method with a Brookfield device (model name: DVELV). The spindle rotation speed was set to 30 rpm and the measurement was performed at 25 °C.

Silicon precursor particles having an average particle diameter (D50) of approximately 1 µm, the n-hexane, and 1-hexyne were mixed in a weight ratio (Silicon precursor particles : the n-hexane : 1-hexyne) of 10:55:1, put into a bead mill (Netzsch, Germany) equipped with zirconium balls, and then milled at 25 °C for 12 hours to prepare a silicon nanoparticle dispersion.

The prepared dispersion was spray-dried at 100 °C to prepare silicon secondary particles that were assemblies of silicon nanoparticles.

The prepared silicon secondary particles and mesophase pitch were mixed in a weight ratio of 55:45 based on a total of 100 parts by weight of the silicon secondary particles and the mesophase pitch. The mixture was heat-treated at 900 °C for an hour under a N₂ atmosphere to prepare a product.

The obtained product was pulverized to obtain a pulverized material, and the obtained pulverized material and mesophase pitch were mixed in a weight ratio of 95:5 based on a total of 100 parts by weight of the pulverized material and the mesophase pitch. The mixture was added to a mixed solvent (distilled water and ethanol at a weight ratio of 3:1), stirred at 25 °C for 2 hours, dried at 100 °C, and then heat-treated at 900 °C for an hour under a N₂ atmosphere to prepare a negative electrode active material.

The negative electrode active material includes a core including silicon nanoparticles and amorphous carbon, with an amorphous carbon coating layer surrounding the core and including amorphous carbon.

97.5% by weight of the prepared negative electrode active material, 1.5% by weight of a styrene butadiene rubber (SBR) as a binder, and 1% by weight of carbon nanotubes as a conductive material were mixed in distilled water to prepare a negative electrode active material slurry. The negative electrode active material slurry was applied on copper foil, dried, and then rolled to make a negative electrode. A half-cell was made using the negative electrode, a lithium metal counter electrode, and an electrolyte. The electrolyte was a mixed solvent (a volume ratio of 3:7) of ethylene carbonate and dimethyl carbonate in which 1 M LiPF₄ is dissolved.

### Comparative Example 1

A negative electrode active material and a battery were made in the same manner as in Example 1, except that ethanol having a viscosity of 1.2 mPa·s at 25 °C (the viscosity being evaluated in the same manner as in Example 1) was used instead of n-hexane as the milling solvent in Example 1, and 1-hexyne was not used.

### Comparative Example 2

A negative electrode active material and a battery were made in the same manner as in Example 1, except that ethanol was used instead of n-hexane as the milling solvent in Example 1, and 1-hexyne was used.

### Comparative Example 3

A negative electrode active material and a battery were made in the same manner as in Example 1, except that n-hexane was used as the milling solvent in Example 1 and stearic acid was used instead of 1-hexyne.

### (Experiment 1) Evaluation of negative electrode active material

The concentration of oxygen in the negative electrode active material was evaluated by a solid-state infrared absorption method using an ONH oxygen analyzer (Chongqing YanRui Instrument Co., Ltd). The measurement conditions were 3,000 °C, a N₂ purity of 99.999% or more, and a pressure of 0.25 MPa.

The cross-section of the negative electrode active material was evaluated by a SEM.

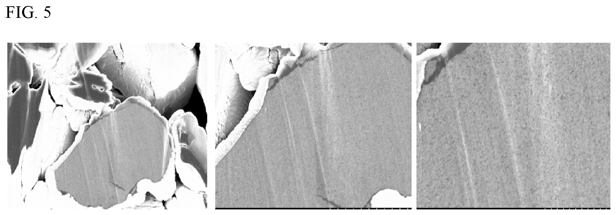

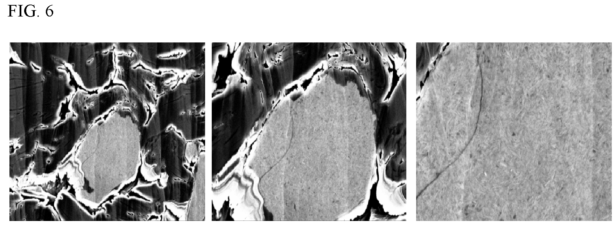

As shown in FIG. 5, it can be seen that the cross-section of the negative electrode active material of Example 1 was uniform. On the other hand, as shown in FIG. 6, it can be seen that the cross-section of the negative electrode active material of Comparative Example 1 was not uniform.

### (Experiment 2) Evaluation of battery characteristics

### Capacity retention rate according to the number of cycles (units: %)

The half-cell batteries were charged and discharged at 0.1 C to measure the charge and discharge capacities. The measured discharge capacity was divided by the weight of the negative electrode active material to calculate the specific capacity, and the charge and discharge efficiency (discharge capacity/charge capacity ratio) was measured.

The half-cell batteries were subjected to 0.2 C constant current (CC) and constant voltage (CV) charging and 0.2 C discharging once; 0.5 C constant current (CC) charging and 0.2 C discharging once; 1 C constant current (CC) charging and 0.2 C discharging once; and 2 C constant current (CC) charging and 0.2 C discharging once to calculate the charging characteristics. The charging was performed under a cut-off condition of 10 mV in the constant current (CC) section and a 15-hour cut-off condition in the constant voltage (CV) section, and the discharging was performed under a 1.5 V cut-off condition. The charging characteristics were measured at each C-rate. The charging characteristic results were expressed by calculating the ratio of the 2C CC charge capacity to the 0.2C CC charge capacity.

### Battery expansion rate (units: %)

The high-temperature gas generation characteristics were evaluated by measuring the cell thickness increase rate for the rechargeable lithium batteries according to the example and the comparative examples. The thickness of the initial cell battery and the thickness of the cell battery after storage at 45 °C for a predetermined period of time were measured, and the thickness increase rate was calculated. The thickness increase rate was calculated according to the following equation.

Thickness increase rate (%) = [(Thickness of cell battery after storage at 45 °C for 10,000 minutes - Thickness of initial cell battery)/Thickness of initial cell battery] * 100

The results of the evaluations are shown in Table 1.

**Table 1**

| | Milling solvent | | Additive | Weight ratio | Milling time (hr) | Silicon nanoparticles D50 (nm) | Oxygen concentration (% by weight) | Capacity retention rate | Battery expansion rate |
|---|---|---|---|---|---|---|---|---|---|
| | Type | Viscosity (mPa.s) | | | | | | | |
| Example 1 | n-Hexane | 0.5 | 1-Hexvne | 10:55:1 | 12 | 94 | 13.9 | 99.2 | 12.1 |
| Comparative Example 1 | Ethanol | 1.2 | None | 10:55 | 12 | 98 | 17.1 | 98.8 | 12.6 |
| Comparative Example 2 | Ethanol | 1.2 | 1-Hexyne | 10:55:1 | 12 | 93 | 17.8 | 97.4 | 12.2 |
| Comparative Example 3 | n-Hexane | 0.5 | Stearic acid | 10:55:1 | 12 | 94 | 17.2 | 98.8 | 13 |

| | | | | | | | | | |
|---|---|---|---|---|---|---|---|---|---|
| *Weight ratio: Weight ratio of silicon precursor particles, milling solvent and additive *Silicon nanoparticles: Silicon nanoparticles prepared by milling. | | | | | | | | | |

As shown in Table 1, the negative electrode active material of the Example had improved battery capacity and a reduced battery expansion rate due to the low concentration of oxygen in the negative electrode active material. In comparison, the negative electrode active materials of the comparative examples did not improve battery capacity or lower a battery expansion rate because the negative electrode active materials had a higher oxygen concentration than the negative electrode active material of the Example.

According to embodiments of the present disclosure, a negative electrode active material for a rechargeable lithium battery is capable of improving battery capacity and reducing an expansion rate of the battery due to the low oxygen concentration in the negative electrode active material.

Although the preferred embodiments of the present disclosure have been described above, the present disclosure is not limited to the disclosed embodiments. Therefore, it should be understood that various changes and modifications can be made by those skilled in the art to which the present disclosure pertains.

## Claims

1. A negative electrode active material for a rechargeable lithium battery, the negative electrode active material comprising:
a silicon-carbon composite including silicon nanoparticles and amorphous carbon,
wherein the negative electrode active material has an oxygen content of 15% by weight or less.

2. The negative electrode active material of claim 1, wherein the negative electrode active material includes a core including the silicon nanoparticles and the amorphous carbon, with an amorphous carbon coating layer surrounding the core.

3. The negative electrode active material of claim 1 or claim 2, wherein the amorphous carbon is soft carbon, hard carbon, mesophase pitch carbide, calcined coke, or a combination thereof.

4. The negative electrode active material of any one of claims 1 to 3, wherein, based on a total of 100 parts by weight of the silicon nanoparticles and the amorphous carbon in the negative electrode active material, a weight ratio of the silicon nanoparticles to the amorphous carbon is 80:20 to 20:80.

5. The negative electrode active material of any one of claims 1 to 4, wherein the negative electrode active material includes a 1-alkyne compound having 3 or more carbon atoms in its main chain.

6. A method of preparing a negative electrode active material for a rechargeable lithium battery, the method comprising:
preparing silicon nanoparticles; and
mixing the silicon nanoparticles or assemblies of the silicon nanoparticles with an amorphous carbon precursor and heat-treating the resulting mixture,
wherein the preparing of the silicon nanoparticles includes milling silicon precursor particles in the presence of an additive and a milling solvent, the milling solvent having a viscosity of 0.1 to 1 mPa·s at 25 °C, with the additive including a 1-alkyne compound having 3 or more carbon atoms in its main chain.

7. The method of claim 6, wherein the solvent is n-hexane.

8. The method of claim 6 or claim 7, wherein the 1-alkyne compound is 1-hexyne.

9. The method of any one of claims 6 to 8, wherein the silicon precursor particles, the solvent, and the additive are included in a weight ratio of 5 to 20:30 to 80:1 in the milling.

10. The method of any one of claims 6 to 9, wherein the milling is ball milling.

11. The method of any one of claims 6 to 10, wherein the milling is performed at 20 to 35 °C for 10 to 25 hours.

12. The method of any one of claims 6 to 11, wherein the silicon nanoparticles have an average particle diameter (D50) of 10 to 200 nm.

13. The method of any one of claims 6 to 12, wherein the silicon nanoparticles or the assemblies of the silicon nanoparticles are mixed with the amorphous carbon precursor and the resulting mixture is heat-treated to form a first product, the first product is mixed with the amorphous carbon precursor to form a second product, and the second product is heat-treated, optionally wherein, based on a total of 100 parts by weight of the silicon nanoparticles or the assembly of the silicon nanoparticles and the amorphous carbon precursor, in the mixing and heat treatment forming the first product, a weight ratio of the silicon nanoparticles or the assemblies of the silicon nanoparticles to the amorphous carbon precursor is 20:80 to 99:1, and
wherein, based on a total of 100 parts by weight of the pulverized material of the first product and the amorphous carbon precursor, in forming the second product, a weight ratio of the pulverized material of the first product and the amorphous carbon precursor is 20:80 to 99.9:0.1

14. A rechargeable lithium battery comprising the negative electrode active material for a rechargeable lithium battery of any one of claims 1 to 5.

15. A rechargeable lithium battery comprising the negative electrode active material for a rechargeable lithium battery prepared by the preparation method of any one of claims 6 to 13.
